Europäisches Patentamt

European Patent Office

Office européen des brevets

(19)

(11) Veröffentlichungsnummer: **0 211 195**
**B1**

(12) **EUROPÄISCHE PATENTSCHRIFT**

(45) Veröffentlichungstag der Patentschrift:
24.05.89

(21) Anmeldenummer: **86108182.6**

(22) Anmeldetag: **14.06.86**

(51) Int. Cl.⁴: **F 16 D 3/50, G 01 B 21/22**

(54) **Kupplungsvorrichtung.**

(30) Priorität: **01.08.85 DE 3527546**

(43) Veröffentlichungstag der Anmeldung:
**25.02.87 Patentblatt 87/9**

(45) Bekanntmachung des Hinweises auf die Patenterteilung:
**24.05.89 Patentblatt 89/21**

(84) Benannte Vertragsstaaten:
**AT CH DE FR GB IT LI NL SE**

(56) Entgegenhaltungen:
**DE-A- 3 206 875**
**DE-A- 3 301 205**
**DE-A- 3 311 204**
**DE-A- 3 340 866**
**GB-A- 577 489**

(73) Patentinhaber: **DR. JOHANNES HEIDENHAIN GMBH,
Fraunhofer Strasse 2-4 Postfach 1260, D-8225 Traunreut
(DE)**

(72) Erfinder: **Dangschat, Holmer, Dipl.-Ing.,
Heinz-von-Stein-Strasse 25, D-8225 Traunreut (DE)**

ACTORUM AG

## Beschreibung

Die Erfindung bezieht sich auf eine Vorrichtung zum Verbinden einer Positionsmeßeinrichtung mit zwei relativ zueinander beweglichen Objekten gemäß dem Oberbegriff des Anspruchs 1.

Aus dem Stand der Technik ist es hinlänglich bekannt, die relative Position zweier Objekte — wie Bett und Schlitten einer Werkzeugmaschine — mit Hilfe von Positionsmeßeinrichtungen zu messen. Auch bei Handhabungsautomaten, sogenannten Industrierobotern, werden die Bewegungen mit Positionsmeßeinrichtungen, im allgemeinen Drehgebern, ermittelt. Üblicherweise wird zur Messung der Relativbewegungen eine Maßverkörperung an einem der Objekte befestigt und an dem zweiten Objekt wird eine Abtasteinrichtung installiert, die bei Relativbewegungen zwischen den Objekten die Maßverkörperung abtastet, so daß die jeweilige Position ermittelt und angezeigt werden kann. Zum Schutz gegen schädliche Einflüsse der Umgebung sind die genannten Bauelemente der Positionsmeßeinrichtung mit Gehäusen versehen, die an den genannten Objekten befestigt sind.

Wenn die Positionsmeßeinrichtungen inkremental arbeiten, müssen sie vor Inbetriebnahme und nach Betriebsunterbrechungen mit Hilfe von Referenzpunkten geeicht werden. Derartige Eichvorgänge sind in einer Anzahl von Patentanmeldungen, beispielsweise in der DE-A 3 311 203 beschrieben. Eine besondere Ausführungsform ist in der DE-A 3 340 866 — von der im Oberbegriff des Anspruchs 1 ausgegangen wird — erläutert. Bei der dort beschriebenen Meßeinrichtung zur Messung der Relativlage zweier Objekte ist eine Teilscheibe mit einer Inkrementalteilung und wenigstens einer Referenzmarke auf einer Welle in einem Gehäuse gelagert und über eine Mitnehmerkupplung und über eine im Gehäuse gelagerte Welle mit einem der Objekte verbunden; die Mitnehmerkupplung wirkt in nur einer Drehrichtung des drehbaren Objekts. Um die Teilscheibe auch in der anderen Drehrichtung mit dem Objekt zu verbinden, ist die Welle über eine Rutschkupplung mit einem in umgekehrter Drehrichtung wirkenden Motor verbunden. Zum Abtasten der Teilscheibe ist eine im Gehäuse befestigte Abtasteinheit vorgesehen. Zum Reproduzieren einer Bezugsposition nach unterbrochener Messung infolge einer Störung wird die Teilscheibe von dem umgepolten Motor bei stillstehender Welle bis zum Überfahren der Referenzmarke verdreht und anschließend in die Momentanposition der stillstehenden Welle beim Auftreten der Störung zurückgestellt; der Drehwinkel von der Referenzmarke bis zur Momentanposition wird zur Wiedergewinnung des bei der Störung verlorengegangenen Meßwertes ermittelt.

Diese und die anderen aus dem Stand der Technik bekannten Positionsmeßeinrichtungen, die zum Eichen der Meßeinrichtung auch bei stillstehenden Meßobjekten geeignet sind, erfordern gegenüber herkömmlichen einfachen Positionsmeßeinrichtungen einen erhöhten konstruktiven und fertigungstechnischen Aufwand.

Ein Anbieter von Positionsmeßeinrichtungen muß demgemäß die aufwendigen, im vorbeschriebenen Sinne eichfähigen Positionsmeßeinrichtungen neben den normalen serienmäßigen Geräten, z.B. standardisierten inkrementalen Drehgebern, anbieten können. Diese vermehrte Typenvielfalt wirkt sich betriebswirtschaftlich negativ aus.

Der Erfindung liegt daher die Aufgabe zugrunde, eine Vorrichtung zu schaffen, mit deren Hilfe Standard-Positionsmeßeinrichtungen so mit den zu messenden Objekten zu verbinden sind, daß mit ihnen die vorbeschriebenen Eichvorgänge bei stillstehenden Maschinen-Bauteilen durchgeführt werden können.

Diese Aufgabe wird mit einer Vorrichtung gelöst, die die Merkmale des Anspruchs 1 aufweist.

Die besonderen Vorteile der Erfindung liegen darin, daß bei Verwendung von Standard-Drehgebern mit Referenzimpuls eine Eichung im vorgeschriebenen Sinne auch bei Maschinen-Bauteilen möglich ist, die momentan keine Relativbewegung zueinander ausführen können. Ferner ist bei der Erfindung von Vorteil, daß der Antriebsmotor nicht — wie beim Stand der Technik — dauernd eingeschaltet sein muß, sondern nur beim Nullungsvorgang an der Mitnehmerkupplung angreift. Beim normalen Meßbetrieb ist er außer Eingriff. Das erhöht die Lebensdauer des Motors, die sonst naturgemäß wesentlich geringer ist als die des Drehgebers. Ferner wird nicht ständig ein Moment auf das zu messende Objekt übertragen, wie das bei einer Positionsmeßeinrichtung, bei der ein Antriebsmotor mit Rutschkupplung integraler Bestandteil der Einrichtung ist, der Fall ist.

Mit Hilfe eines Ausführungsbeispiels soll die Erfindung anhand der Zeichnungen noch näher erläutert werden.

Es zeigt:

Fig. 1 einen Drehgeber mit angeflanschter Kupplungsvorrichtung im Teilschnitt;

Fig. 2 einen Schnitt durch die Kupplungsvorrichtung gemäß Fig. 1 entlang der Schnittlinie II/II;

Fig. 3 eine Variante einer Mitnehmerkupplung.

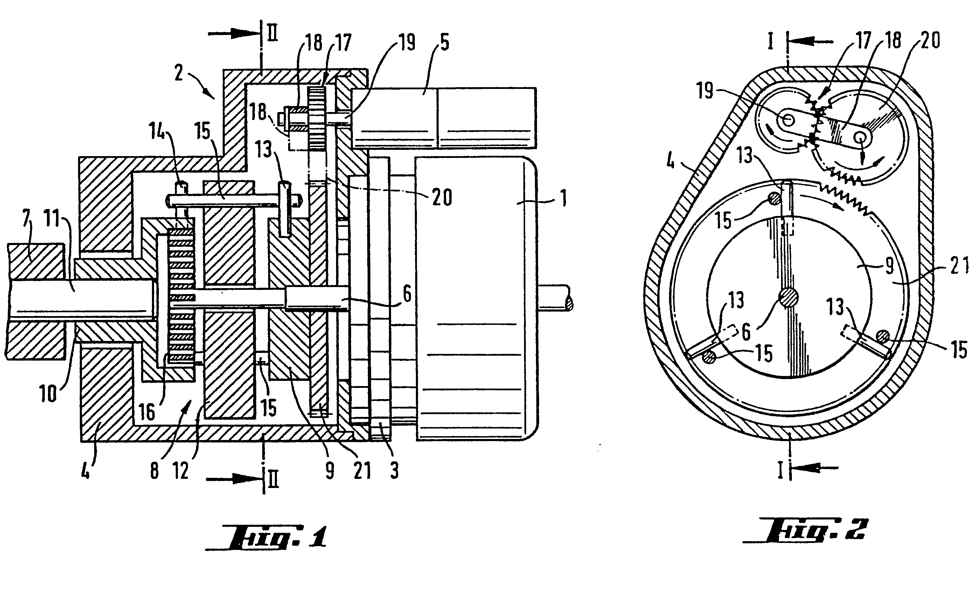

Ein in Figur 1 abgebildeter Standard-Drehgeber 1 mit einer in seinem Innern befindlichen Teilscheibe (nicht dargestellt) weist wenigstens eine Referenzmarke auf. Die Teilscheibe mit ihrer Inkrementalteilung und der Referenzmarke wird in herkömmlicher Weise von einer ebenfalls nicht dargestellten Abtasteinrichtung abgetastet. Diese Vorgänge sind aus der Literatur hinreichend bekannt, so daß sich hier jede weitere Erörterung erübrigt. Üblicherweise ist ein Drehgeber an einem Maschinen-Bauteil angeflanscht, und an seiner Drehgeberwelle ist mittels einer drehsteifen Kupplung das andere Maschinen-Bauteil befestigt. Bei Relativbewegungen zwischen den Maschinen-Bauteilen wird die Welle gegenüber dem Gehäuse und der darin befindlichen Abtasteinrichtung verdreht, die Messung der Relativbewegung erfolgt.

Der Drehgeber 1 gemäß Figur 1 weist demgegenüber eine Kupplungsvorrichtung 2 auf, die an dem Befestigungsflansch 3 des Drehgebers 1 angebracht ist. Das Gehäuse 4 der Kupplungsvorrichtung 2 nimmt einen Elektromotor 5 auf, der parallel zur Achse der Drehgeberwelle 6 angeflanscht ist. Zwischen der Drehgeberwelle 6, an der die nicht dargestellte Teilscheibe mit der Referenzmarke fest angebracht ist, und dem Maschinen-Bauteil, dessen Relativbewegung gemessen werden soll, sind die Einzelteile der Mitnehmerkupplung 8 angeordnet. Die Mitnehmerkupplung 8 ist an sich bekannt und besteht aus einer Anschlußnabe 9, die auf der Drehgeberwelle 6 befestigt ist, und aus einer zweiten Anschlußnabe 10, die auf einer zweiten Welle 11, die dem Maschinen-Bauteil 7 zugeordnet ist, befestigt ist, sowie aus einer Ringscheibe 12. An der Peripherie der beiden Anschlußnaben 9 und 10 ragen jeweils drei um 120° zueinander versetzte Anschläge 13 bzw. 14 in radialer Richtung heraus. Zwischen den beiden Anschlußnaben 9 und 10 ist die Ringscheibe 12 angeordnet, die an ihrer Peripherie drei um 120° zueinander versetzte Bolzen 15 aufweist, die in axialer Richtung aus Bohrungen beidseitig der Ringscheibe 12 herausragen und mit den Anschlägen 13 bzw. 14 der Anschlußnaben 9 bzw. 10 bei der Drehung der Wellen 6 und 11 in Kontakt stehen. Die Ringscheibe 12 besitzt keine eigene Lagerung und ist aufgrund der symmetrischen Anordnung der Bolzen 15 bei der Drehung der Wellen 6 und 11 selbstzentrierend und übt auf die nicht dargestellten Lager der Wellen 6 und 11 keine Querkraft aus.

Die Mitnehmerkupplung 8 nimmt bei einer vorgegebenen Drehrichtung des drehbaren Objekts 7 und damit der Welle 11 über die miteinander in Kontakt stehenden Bolzen 15 der Ringscheibe 12 und Anschläge 13 und 14 der Anschlußnaben 9 und 10 die Welle 6 der Teilscheibe mit. Bei einer Umkehrung der vorgegebenen Drehrichtung der Welle 11 würde die Welle 6 nicht mehr mitgenommen, da die Bolzen 15 der Ringscheibe 12 und die Anschläge 14 der Anschlußnabe 10 außer Kontakt geraten würden. Um auch bei dieser umgekehrten Drehrichtung der Welle 11 einen Kontakt zwischen den Bolzen 15 der Ringscheibe 12 und den Anschlägen 13, 14 der Anschlußnaben 9, 10 zu gewährleisten, ist am freien Ende der Drehgeberwelle 6 eine Spiralfeder 16 eingehängt, deren anderes Ende in der Anschlußnabe 10 verankert ist. Die Spiralfeder 16 ist so vorgespannt, daß die Anschläge 13, 14 der Anschlußnaben 9, 10 ständig an dem Bolzen 15 anliegen und so in jedem Fall die Mitnahme der Drehgeberwelle 6 — also unabhängig von der Bewegungsrichtung der Welle 11 — gewährleistet ist. Durch das Moment der Spiralfeder 16 wird sozusagen die Drehgeberwelle 6 der Drehung des Maschinen-Bauteiles 7 auch in der Bewegungsrichtung nachgeführt, in der die Mitnehmerkupplung nicht formschlüssig arbeitet. In beiden Drehrichtungen des zu messenden Objekts sind somit die beiden Wellen 6 und 11 miteinander verbunden, so daß die Relativlage der beiden zu messenden Objekte durch die Winkelmeßeinrichtung 1 exakt ermittelt werden kann.

Um zur Messung der Relativlage der beiden Objekte eine bestimmte Bezugsposition zu gewinnen, wird vor Beginn einer neuen Messung das zu messende Objekt 7 solange verdreht, bis eine Referenzmarke abgetastet wird. Bei dieser Bezugsposition wird der Zähler auf den Wert «Null» oder auf einen anderen, vorher festgelegten oder durch ein Programm bestimmten Zahlenwert gesetzt.

Wenn nun während eines Bearbeitungsvorganges und damit einer Messung eine Störung, etwa infolge einer Stromunterbrechung, auftritt, so wird der Arbeitsgang und damit auch die Messung des drehbaren Objekts 7 unterbrochen. Bei Stromunterbrechung sind der beim Auftreten der Störung vorhandene Meßwert und damit auch die Bezugsposition verlorengegangen. Da jedoch beim Auftreten des Störungsfalls das zu messende Objekt 7 in Form eines Greifers des Industrieroboters in der Regel gerade im Eingriff ist, kann das Objekt 7 nicht, wie vor Beginn des Arbeitsvorganges und der Messung, solange verdreht werden, bis die Abtasteinheit die ursprüngliche Referenzmarke abtastet.

Zum Reproduzieren der Bezugsposition wird bei stillstehender Welle 11 der Antriebsmotor 5 eingeschaltet.

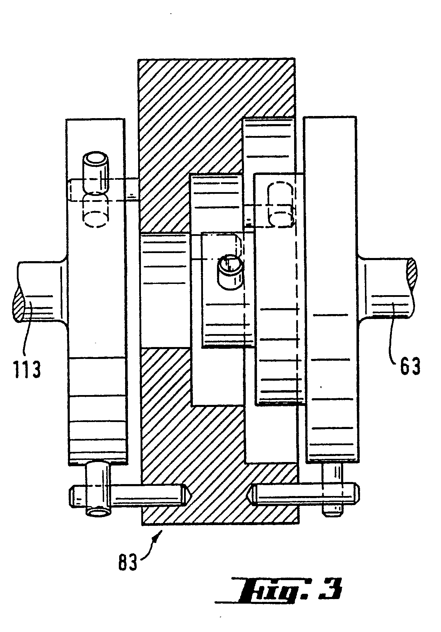

Wie aus Figur 2 ersichtlich ist, weist der Antriebsmotor 5 ein Getriebe 17 auf, das eine Schwinge 18 beinhaltet. Durch Reibung zwischen der Motorwelle 19 und der Schwinge 18 wird nach dem Einschalten des Antriebsmotors 5 ein von der Schwinge 18 getragenes Zwischenritzel 20 in ein Zahnrad 21 eingekuppelt, das zwischen der Teilscheibe und der Anschlußnabe 9 fest auf der Drehgeberwelle 6 angeordnet ist. Nach dem Einkuppeln des Zwischenritzels 20 in das Zahnrad 21 wird durch den Antriebsmotor 5 die Teilscheibe über die Drehgeberwelle 6 gegen das Moment der Spiralfeder 16 soweit verdreht, bis die Referenzmarke von der Abtasteinrichtung abgetastet und daraus ein Referenzimpuls abgeleitet wird. Durch diesen Referenzimpuls, der die Bezugsposition repräsentiert, ist die Ausgangslage wieder hergestellt und der Eichvorgang kann beendet werden. Nähere Einzelheiten sollen hier nicht erörtert werden, da sie aus der einschlägigen Literatur hinreichend bekannt sind.

Nach dem Überfahren der Referenzmarke wird der Antriebsmotor 5 abgeschaltet und läuft durch das Moment der gespannten Feder 16 in entgegengesetzter Richtung, wodurch sich auch die Drehgeberwelle 6 mit der Teilscheibe in die Ausgangsposition vor der Eichung zurückbewegt, bis die Anschläge 13, 14 der Anschlußnaben 9, 10 gegen die Bolzen 15 anstoßen. Der abgeschaltete Antriebsmotor 5 kann dabei zur Dämpfung der Rückdrehbewegungen mitlaufen und die Schwinge 18 kuppelt aufgrund der Trägheit des Motors 5 beim Anstoß der Anschläge 13, 14 an die Bolzen 15 das Zwischenritzel 20 und damit den Antriebsmotor 5 aus.

Es versteht sich, daß der Antriebsmotor 5 nach Erzeugung des Referenzimpulses auch umgepolt werden kann, und die Spiralfeder 16 beim Rückdrehen unterstützt. Auch in diesem Fall kann sich die Teilscheibe des Drehgebers 1 mit der Mitnehmerkupplung 8 wieder frei drehen, sobald sich das Zwischenritzel 20 aus der Verzahnung des Zahnrades 21 herausgehoben hat.

Sobald sich die Teilscheibe wieder vom Getriebe 17 gelöst hat, ist die Bezugsposition wieder gewonnen, und der unterbrochene Arbeitsvorgang kann fortgesetzt werden.

In Figur 3 ist eine Einrichtung dargestellt, in der die Mitnehmerkupplung 83 so ausgebildet ist, daß Drehwinkel über 360° hinaus möglich sind.

Die Mitnehmerkupplung 8 gemäß Figur 1 weist jeweils um 120° zueinander versetzte Bolzen 15 und Anschläge 13, 14 auf, somit ist eine Relativdrehung der Welle 6 bezüglich der Welle 11 beim Reproduzieren der Bezugsposition nur innerhalb eines Winkels < 240° möglich. Daher sind auf der Teilscheibe zum Reproduzieren einer verlorengegangenen Bezugsposition mindestens zwei Referenzmarken erforderlich, die zur gegenseitigen Unterscheidung einer Codierung in Form von Codemarken bedürfen, wie sie beispielsweise in der DE-PS 2 952 106 beschrieben sind.

Um zum Reproduzieren einer verlorengegangenen Bezugsposition mit nur einer Referenzmarke auf der Teilscheibe auskommen zu können, die dann keiner Codierung mehr bedarf, wird eine Mitnehmerkupplung 83 gemäß Figur 3 vorgeschlagen, die eine Relativdrehung der Welle 63 bezüglich der Welle 113 über einen Winkel von 360° hinaus ermöglicht.

Eine derartige Ausführung der Mitnehmerkupplung 83 ist in der DE-OS 3 340 866 ausführlich beschrieben und unter konstruktiver Anpassung an die erfindungsgemäße Vorrichtung auch hier vorteilhaft einsetzbar.

Der Kraftschluß innerhalb der Mitnehmerkupplung 8 oder 83 könnte statt durch eine Spiralfeder 16 auch durch Magnete oder federnde Schnappverbindungen erzeugt werden.

## Patentansprüche

1. Vorrichtung zum Verbinden einer Positionsmeßeinrichtung (1) mit zwei relativ zueinander beweglichen Objekten, bei der die Maßverkörperung (an der Welle 6) der Positionsmeßeinrichtung (1) mit einem der zu messenden Objekte (7) zum Zwecke der Eichung mittels einer mehrteiligen Mitnehmerkupplung abkoppelbar verbunden ist, wobei die Mitnehmerkupplung in einer Bewegungsrichtung des einen zu messenden Objekts (7) formschlüssig über Anschläge (13, 14) arbeitet und in der anderen Bewegungsrichtung durch ein die Anschläge in Berührung haltendes Moment die Maßverkörperung kraftschlüssig nachführt und ein Antrieb (5) vorgesehen ist, mit dem die Maßverkörperung entgegen der mit Formschluß arbeitenden Bewegungsrichtung — zum Auffinden einer verlorengegangenen Bezugsposition — zumindest bis zu einem Referenzpunkt zurückverstellt werden kann und der Maßverkörperung nach überfahren des Referenzpunkts die Rückkehr in die Ausgangslage ermöglicht ist, dadurch gekennzeichnet, daß das den Kraftschluß bewirkende Moment durch eine innerhalb der Mitnehmerkupplung (8) angeordnete Vorrichtung (16), vorzugsweise eine Spiralfeder, erzeugt wird und daß der Antrieb (5) im Falle einer Nacheichung in ein maßverkörperungsseitiges Antriebsteil (21) der Mitnehmerkupplung (8) einrückbar ist, um die Maßverkörperung gegen das den Kraftschluß bewirkende Moment zumindest bis zu einem Referenzpunkt verstellt.

2. Vorrichtung nach Anspruch 1, dadurch gekennzeichnet, daß der Antrieb (5) ein Elektromotor mit Getriebe (17) ist, dessen Zwischenritzel (20) nach dem Einschalten des Elektromotors (5) selbsttätig in ein Zahnrad (21) an der Mitnehmerkupplung (8) einkuppelt.

3. Vorrichtung nach Anspruch 1, dadurch gekennzeichnet, daß der Antrieb ein Zwischenrad aufweist, das nach dem Einschalten selbsttätig an ein Reibrad an der Mitnehmerkupplung ankuppelt.

## Claims

1. Device for connecting a position measuring device (1) with two objects movable relative to one another, in which the measuring body (on the shaft 6) of the measuring device (1) is releasably connected to one of the objects to be measured (7) for the purpose of calibration by means of a multi-part carrier clutch, wherein the carrier clutch operates in one direction of movement of the one object to be measured (7) interlocking through stops (13, 14) and in the other direction of movement the measuring body is entrained under a force connection by a moment holding the stops in contact and a drive (5) is provided, with which the measuring body can be adjusted back opposite to the direction of movement acting with interlocking — for finding a lost reference position — at least up to a reference point and the measuring body is enabled to return to the output position after overshooting the reference point, characterized in that the moment exerting the force connection is created by a device (16), preferably a spiral spring, arranged within the carrier clutch (8), and in that the drive (5) in the case of a post calibration can be engaged in a drive part (21) of the carrier clutch (8) on the measuring body side, in order that the measuring body is adjusted against the moment exerting the force connection at least up to reference point.

2. Device according to claim 1, characterized in that the drive (5) is an electric motor with gearing (17), whose intermediate gear (20) automatically engages with a gear (21) of the carrier clutch (8) after switching on the electric motor (5).

3. Device according to claim 1, characterized in that the drive has an intermediate wheel which automatically engages a friction wheel on the carrier clutch after switching on.

## Revendications

1. Dispositif pour relier un dispositif de mesure de position (1) à deux objets mobiles relativement l'un par rapport à l'autre, dans lequel le système de graduation (sur l'arbre 6) du dispositif de mesure de position (1) est reliée de manière découplable à l'un des objets (7) à mesurer, dans le but de l'étalonnage, au moyen d'un accouplement d'entraînement en plusieurs parties, l'accouplement d'entraînement travaillant en mode positif (desmodromique), par des butées (13, 14), dans un sens de déplacement de l'un des objets (7) à mesurer et entraînant en mode positif (non desmodromique) le système de graduation, dans l'autre sens de déplacement, au moyen d'un couple maintenant les butées en contact, et un entraînement (5) étant prévu, avec lequel le système de graduation peut être ramené en arrière au moins jusqu'à un point de référence, contre le sens de déplacement travaillant avec l'entraînement positif, pour trouver une position de référence perdue, et le retour en position de départ du système de graduation étant possible après passage au point de référence, caractérisé en ce que le couple provoquant l'entraînement positif est produit par un dispositif (16) disposé à l'intérieur de l'accouplement d'entraînement (8), de préférence un ressort spiral, et en ce que, dans le cas d'un réétalonnage, l'entraînement (5) peut être mis en prise dans une partie d'entraînement (21), située du côté de système de graduation, de l'accouplement d'entraînement (8), pour que le système de graduation soit décalé contre le couple provoquant l'entraînement non positif, au moins jusqu'à un point de référence.

2. Dispositif selon la revendication 1, caractérisé en ce que l'entraînement (5) est un moteur électrique avec un engrenage (17), dont le pignon intermédiaire (20) est couplé automatiquement avec une roue dentée (21) située sur l'accouplement d'entraînement (8), après mise en service du moteur électrique (5).

3. Dispositif selon la revendication 1, caractérisé en ce que l'entraînement présente une roue intermédiaire s'accouplant automatiquement après la mise en service à une roue à friction située sur l'accouplement d'entraînement.

**Fig. 1**

**Fig. 2**

EP 0 211 195 B1

113

63

83

_Fig. 3_